# EUROPEAN PATENT SPECIFICATION

(11) **EP 3 130 390 B1**
(45) Date of publication and mention of the grant of the patent: **24.03.2021**
(21) Application number: 16169674.5
(22) Date of filing: 13.05.2016
(51) Int. Cl.: B01D 61/02, B01D 67/00, B01D 69/02, B01D 71/32, B01D 71/36

(54) **PTFE/PFSA ADDITIVE BLENDED MEMBRANE**
PTFE/PFSA-ADDITIV MISCHMEMBRAN
MEMBRANE DE MÉLANGE DE PTFE ET D'ADDITIF PFSA

(30) Priority: 31.07.2015 US 201514815031
(43) Date of publication of application: 15.02.2017
(73) Proprietor: Pall Corporation, Port Washington, NY 11050 (US)
(72) Inventor: SITTERER, Andrew T., Massapequa, NY New York 11758 (US); SINGH, Amarnauth, Selden, NY New York 11784 (US)
(74) Representative: Hoeger, Stellrecht & Partner Patentanwälte mbB

(56) References cited:
- WO-A1-00/63995
- WO-A2-89/12490
- US-B1- 6 179 132
- XIANGGUO TENG ET AL: "Solution casting Nafion/polytetrafluoroethylene membrane for vanadium redox flow battery application", ELECTROCHIMICA ACTA., vol. 88, 1 January 2013 (2013-01-01), pages 725-734, XP055329928, GB ISSN: 0013-4686, DOI: 10.1016/j.electacta.2012.10.093
- TAKUYA NAGAFUCHI ET AL: "Particle Retention Mechanism of Filter in High Temperature Chemical", DIFFUSION AND DEFECT DATA. PART B: SOLID STATE PHENOMENA, vol. 145-146, 1 January 2009 (2009-01-01), pages 69-72, XP055330201, CH ISSN: 1012-0394, DOI: 10.4028/www.scientific.net/SSP.145-146.69
- ZHAOLIANG CUI ET AL: "Recent progress in fluoropolymers for membranes", PROGRESS IN POLYMER SCIENCE., vol. 39, no. 1, 1 January 2014 (2014-01-01), pages 164-198, XP055299292, GB ISSN: 0079-6700, DOI: 10.1016/j.progpolymsci.2013.07.008

## Description

### BACKGROUND OF THE INVENTION

PTFE membranes, particularly expanded PTFE (ePTFE) membranes, are used in a variety of liquid and gas filtration applications, including applications that involve treating challenging fluids such as corrosive or chemically active liquids. However, there is a need for porous membranes that can filter hot sulfuric perioxide mixture (SPM) fluids and/or exhibit metal scavenging or metal removal efficiency while providing low flow resistance.

These and other advantages of the present invention will be apparent from the description as set forth below.

WO 00/63995 A1 discloses a method of fabricating composite ionically conductive membranes wherein at least one of the components is initially provided in the form of a precursor. The composite material may comprise PTFE to form a polymer matrix and an acidic material with a sulfonic acid group incorporated into the matrix, e.g. perfluorosulfonic acids (PFSA).

In the scientific article "Solution casting Nafion/polytetrafluoroethylene membrane for vanadium redox flow battery application" X. Teng et al., Electrochimica Acta Vol 88 (2013), pages 725-734, describe a solution casting method using blends of perfluorosulfonic acid (Nafion) and PTFE for the manufacture of membranes for vanadium redox flow battery applications.

In the scientific article "Particle retention mechanism of filter in high temperature chemical" T. Nagafuchi et al., Solid State Phenomena Vols. 145-146 (2009), pages 69-72, describe the filtering effect of a 30 nm rated filter in a sulfuric acid - hydrogen peroxide mixture (SPM) process.

US patent US 6,179,132 B1 relates to a porous membrane which is formed from a porous polyperfluorocarbon membrane substrate having its surface modified with a perfluorocarbon polymer composition comprising, e.g., Nafion.

In the scientific article "Recent progress in fluoropolymers for membranes" Z. Cui et al., Progress in Polymer Science Vol 39 (2014), pages 164-198, present the structures and properties of fluoropolymers for membranes, the preparation and modification methods of fluoropolymer membranes, and their applications.

### BRIEF SUMMARY OF THE INVENTION

An embodiment of the invention provides a porous membrane comprising PTFE blended with perfluorosulfonic acid (PFSA) additive as set out in claim 1.

In another embodiment, a method for filtering a sulfuric peroxide mixture (SPM) fluid is provided, the method comprising passing the fluid through a porous membrane comprising PTFE blended with perfluorosulfonic acid (PFSA) additive, and removes particles from the fluid as defined in claim 5.

In yet another embodiment, a method for filtering a metal-containing fluid is provided, the method comprising passing a metal-containing fluid through a porous membrane comprising PTFE blended with perfluorosulfonic acid (PFSA) additive, and removes metal from the fluid as defined in claim 2.

### DETAILED DESCRIPTION OF THE INVENTION

In accordance with an embodiment of the present invention, a porous membrane comprises PTFE blended with perfluorosulfonic acid (PFSA) additive, wherein the membrane has a CWST of about 30 dynes/cm (about 30 x 10⁻⁵ N/cm) to about 40 dynes/cm (about 40 x 10⁻⁵ N/cm).

In one embodiment of the membrane, the PFSA is cross-linked, in another embodiment, the PFSA is non-cross-linked.

In another embodiment, a method for filtering SPM fluid is provided, the method comprising passing the fluid through a porous membrane comprising PTFE blended with perfluorosulfonic acid (PFSA) additive, wherein the membrane has a CWST of at least about 30 dynes/cm (about 30 x 10⁻⁵ N/cm), and removes particles (such as silica-containing particles) from the fluid.

A method for filtering a metal-containing fluid according to an embodiment of the invention comprises passing a metal-containing fluid through a porous membrane comprising PTFE blended with perfluorosulfonic acid (PFSA) additive, wherein the membrane has a CWST of at least about 30 dynes/cm (about 30 x 10⁻⁵ N/cm), and removes metal from the fluid. In some embodiments of the method, the membrane removes Group 2 metals (e.g., Mg and/or Ca), polyvalent metals and/or transition metals (e.g., Cr, Mn, Fe, and/or Ni) from the fluid.

In another embodiment, a method of making a membrane is provided, the method comprising combining PTFE resin with perfluorosulfonic acid (PFSA) additive, optionally also including a lubricant; forming a tape; stretching the tape to produce a porous membrane; and, soaking the membrane in isopropyl alcohol.

In another embodiment, a method of preparing a porous membrane is provided, the method comprising preparing a blend comprising PTFE and PFSA additive, optionally with a lubricant; extruding the blend into a tape; biaxially stretching the tape to obtain the porous membrane; optionally annealing the porous membrane at a temperature of about 325 °C for about 5 minutes.

In some embodiments of making membranes according to the invention, a cross-linking agent is included, in other embodiments, a cross-linking agent is not used.

Advantageously, in contrast with the preparation of membranes for some applications wherein a metal agent is used, and the metal agent is removed by a post washing process (e.g., using HCl) to meet standards (e.g., in the microelectronics industry), membranes according to the invention can be prepared free of metal agents. Additionally, in contrast with membranes prepared with a coating, membranes according to the invention can be produced functional as made, and since there is no coating, the pore structure is not adversely affected. Moreover, membranes can be prepared according to the invention in a manufacturing friendly process, e.g., the preparation can be easily incorporated into existing manufacturing processes, resulting in increased speed of preparation.

Additionally, scanning electron micrographs of membranes according to the invention compared to control (non-blended) PTFE membranes show similar pore, fibril, and node structures.

The porous membranes according the invention advantageously provide a combination of high metal scavenging or metal removal efficiency and low flow resistance, while remaining wet in the fluid being processed (i.e., the membranes are non-dewetting in the process fluid) and are useful in a wide range of liquid, and gas (including air) filtration applications, including sterile filtration applications. Exemplary applications include for example, diagnostic applications (including, for example, sample preparation and/or diagnostic lateral flow devices), ink jet applications, lithography, e.g., as replacement for HD/UHMW PE based media, filtering fluids for the pharmaceutical industry, metal removal, production of ultrapure water, treatment of industrial and surface waters, filtering fluids for medical applications (including for home and/or for patient use, e.g., intravenous applications, also including, for example, filtering biological fluids such as blood (e.g., virus removal)), filtering fluids for the electronics industry (e.g., filtering photoresist fluids in the microelectronics industry and hot sulfuric perioxide mixture (SPM) fluids), filtering fluids for the food and beverage industry, beer filtration, clarification, filtering antibody- and/or protein-containing fluids, filtering nucleic acid-containing fluids, cell detection (including *in situ),* cell harvesting, and/or filtering cell culture fluids. Alternatively, or additionally, porous membranes according to embodiments of the invention can be used to filter air and/or gas and/or can be used for venting applications (e.g., allowing air and/or gas, but not liquid, to pass therethrough). Porous membranes according to embodiments of the inventions can be used in a variety of devices, including surgical devices and products, such as, for example, ophthalmic surgical products. The inventive membranes are dimensionally stable. In some embodiments, the porous PTFE membranes can be utilized individually, e.g., as unsupported membranes, and in other embodiments, the porous PTFE membranes can be combined with other porous elements and/or another component, to provide, for example, an article such as a composite, a filter element, and/or a filter.

One example of a suitable PFSA additive for use in blending with PTFE is available from Solvay Specialty Polymers (Borger, Texas) as Aquivion® PFSA (e.g., AQUIVION PFSA D83-24B, AQUIVION PFSA D83-06A, and AQUIVION PFSA D79-20BS), which is based on a Short Side Chain (SSC) copolymer of Tetrafluoroethylene and a Sulfonyl Fluoride Vinyl Ether (SFVE) F2C=CF-O-CF2-CF2-SO2F. The ionomer dispersions contain its sulfonic acid form. Another example of a suitable PFSA additive is a DuPont™ Nafion® PFSA polymer dispersion.

In preparing the blend, the concentration of PFSA additive in the range of from about 1% to about 20% preferably, in the range of from about 1% to about 4% (weight/weight).

A variety of PTFE resins (including commercially available resins) can be blended with PFSA additive in accordance with the invention. Preferably, a lubricant is included. A variety of lubricants and lubricant concentrations are suitable as is known in the art.

Membranes can be prepared as known in the art. If desired, in combining PFSA additive with PTFE, the PFSA additive can be sprayed with the PTFE resin (e.g., for improved distribution), before physical mixture with the lubricant.

For example, the required amount of a PTFE powder is mixed with a solution of PFSA additive in a suitable solvent, for example, an alcohol solvent such as methanol, ethanol, or isopropanol, to obtain a blend, which is then mixed with a lubricant such as odorless mineral spirits, e.g., Isopar G, and the resulting paste is subjected to shear, for example, in a twin roller, and formed into a billet under a pressure of about 300 psi (about 2070 kPa)or more, at least twice, each for a period of about 55 sec. The resulting billets are equilibrated at room temperature for about 12 hrs or more. The billets are then extruded into the desired shape. For example, extrusion is performed at 26 mm die gap size, maximum pressure and constant temperature of 55 °C resulting in a tube shaped PTFE tape. Next, the tube shaped tape is cut open along the central axis and re-rolled around a pipette, resulting in a new billet (non-compressed). The new billet is re-extruded at the same conditions as used during first extrusion process. This step is added to provide advantageous cross-directional mechanical properties to the PTFE tape. Calendaring is performed at 30°C targeting a tape thickness of 9 - 10 mils (228 µm - 254 µm) and cut into 4x4". The resulting tape is then dried at 125 °C for 1 h, whereby the lubricant is removed from the extruded tape.

The tape is then stretched, e.g., at the following conditions: Stretch ratio of machine direction (MD) and transverse direction (TD) is 3 at 300% / sec stretch rate. Temperature in the stretch oven is set to 150 °C.

The stretched tape is then annealed. Annealing is conducted in the annealing oven, following which the tape is cooled. The porosity that is produced by the above stretching is retained upon cooling.

Without beyond bound to any particular theory, it is believed that soaking the membrane in isopropyl alcohol (IPA) exposes more of the surface for contact with the fluid to be treated, and improves metal scavenging capability.

The present PTFE/PFSA additive blend membranes have pores of diameter in the range from 1 nm to 100 nm.

Typically, the membrane has a thickness in the range of from about 0.2 to about 5.0 mils (about 5 to about 127 microns), preferably, in the range of from about 0.5 to about 1.0 mils (about 13 to about 25 microns), though membranes can be thicker or thinner than those values.

The porous membrane has critical wetting surface tension as defined in the claims (for a definition of CWST see for example, U.S. Patent 4,925,572). CWST can be measured by relying on a set of solutions of certain composition. Each solution has specific surface tension. The solution's surface tension ranges from 25 to 92 dyne/cm (25 x 10⁻⁵ N/cm to 92 x 10⁻⁵ N/cm) in small non-equivalent increments. To measure the membrane surface tension, the membrane is positioned on to top of white light table, one drop of a solution of certain surface tension is applied to the membrane surface and the time the drop takes to penetrate through the membrane and become bright white as an indication of light going through the membrane is recorded. Instant wetting is considered when the time the drop takes to penetrate the membrane is ≤ 10 seconds. If the time > 10 seconds, the solution is considered to partially wet the membrane.

The membrane has a CWST in the range of from about 30 dynes/cm (about 30 x 10⁻⁵ N/cm) to about 40 dynes/cm (about 40 x 10⁻⁵ N/cm).

The membrane has first porous surface and a second porous surface, and a bulk between the first porous surface and the second porous surface, wherein the bulk comprises PTFE blended with PFSA additive.

An article such as a filter, filter element and/or composite including the porous membrane can include additional elements, layers, or components, that can have different structures and/or functions, e.g., at least one of any one or more of the following: prefiltration, support, drainage, spacing and cushioning. Illustratively, the filter can also include at least one additional element such as a mesh and/or a screen.

In accordance with embodiments of the invention, the membrane, filter element, composite and/or filter can have a variety of configurations, including planar, pleated, spiral, and/or hollow cylindrical.

The membrane, filter element, composite and/or filter is typically disposed in a housing comprising at least one inlet and at least one outlet and defining at least one fluid flow path between the inlet and the outlet, wherein the membrane is across the fluid flow path, to provide a filter device. Preferably, for crossflow applications, the membrane, composite and/or filter is disposed in a housing comprising at least one inlet and at least two outlets and defining at least a first fluid flow path between the inlet and the first outlet, and a second fluid flow path between the inlet and the second outlet, wherein the membrane is across the first fluid flow path, to provide a filter device. The filter device may be sterilizable. Any housing of suitable shape and providing at least one inlet and at least one outlet may be employed.

The housing can be fabricated from any suitable rigid impervious material, including any impervious thermoplastic material, which is compatible with the fluid being processed. For example, the housing can be fabricated from a metal, such as stainless steel, or from a polymer. In an embodiment, the housing is a polymer, such as an acrylic, polypropylene, polystyrene, or a polycarbonated resin.

### EXAMPLE 1

This example demonstrates a method of preparing PTFE membranes blended with different concentrations of PFSA additive according to embodiments of the invention.

PTFE resin is mixed with 15 phr lubricant (EXXOL D80) and PFSA additive at concentrations of 5 phr, 10 phr, and 20 phr (24% w/w; AQUIVION PFSA 24; D83-24B Solvay Plastics), for 20 minutes and equilibrated for 12 hours.

Billets are formed by pressuring the mixture twice at 20 bars for 55 seconds, and equilibrated for 12 hours at room temperature.

Extrusion is performed at 26 mm gap size, maximum pressure and constant temperature of 55 °C resulting in tube-shaped PTFE tapes. The tubes are cut open along the central axis and re-rolled around a pipette, resulting in new billets. The billets are re-extruded with same conditions as used during first extrusion process.

Calendaring is performed at room temperature to a resulting tape thicknesses of 9-10 mils with 4x4 inch in length and width dimensions. Tapes are dried at 125 °C for 1 hour. Tapes are stretched such that stretch ratios of both machine direction (MD) and transverse direction (TD) ratios are 1.5 and 3.0, at 300%/sec stretch rate. The temperature in the stretch oven is set to 150 °C, and annealing is conducted in the annealing oven at 350 °C for 5 seconds.

Membranes are soaked for 5 days in 1:1 isopropyl alcohol (IPA):deionized (DI) water.

The membrane with the highest PFSA concentration (20 phr) is challenged in static mode with sulfuric perioxide mixture (SPM) at 140 °C for 3 hours.

Membranes are washed in DI water overnight and dried (including the SPM challenged membrane) at 160 °C for 10 min.

The results (compared to an untreated (control) PTFE membrane without blending with PFSA) are as follows:

| membrane | CWST range (dynes/cm²) |
|---|---|
| Control PTFE, no PFSA | 25-27 |
| PFSA content 5 phr (w/w) | 31-33 |
| PFSA content 10 phr (w/w) | 31-33 |
| PFSA content 20 phr (w/w) | 31-33 |
| After IPA:DI soak (PFSA 5 phr) | 31-35 |
| After IPA:DI soak (PFSA 20 phr) | 35-41 |
| After static SPM challenge (PFSA 20 phr) | 35-41 |

This example shows CWST is stably increased, providing non-dewetting membranes, even after exposure to SPM, in accordance with an embodiment of the invention.

## Claims

1. A porous membrane comprising PTFE blended with perfluorosulfonic acid (PFSA) additive, wherein the membrane has a Critical Surface Wetting Tension (CWST) of about 30 x 10⁻⁵ N/cm (about 30 dynes/cm) to about 40 x 10⁻⁵ N/cm (about 40 dynes/cm), and wherein the porous membrane has pores of a diameter in the range from 1 nm to 100 nm.

2. A method for filtering a metal-containing fluid, the method comprising passing a metal-containing fluid through a porous membrane according to claim 1 and removing metal from the fluid.

3. The method of claim 2, wherein the metal-containing fluid is a fluid used in the electronics industry.

4. The method of claim 2 or 3, comprising removing Group 2 metals and/or transition metals from the metal-containing fluid.

5. A method for filtering a sulfuric peroxide mixture (SPM) fluid, the method comprising passing the SPM fluid through a porous membrane according to claim 1 and removing particles from the SPM fluid.

6. The method of claim 5, comprising removing metal from the SPM fluid.

7. The method of claim 6, comprising removing Group 2 metals and/or transition metals from the metal-containing fluid.

8. A method of making a porous membrane, the method comprising combining PTFE resin with perfluorosulfonic acid (PFSA) additive to prepare a blend also including a lubricant; said blend comprising the PFSA additive in a concentration of from about 1 % by weight to about 20 % by weight;
forming a tape;
stretching the tape to produce a porous membrane; and,
soaking the porous membrane in isopropyl alcohol (IPA).

9. The method of claim 8, further comprising drying the membrane.

## Patentansprüche

1. Poröse Membran, umfassend PTFE gemischt mit einem Perfluorsulfon-säure-(PFSA-)Additiv, wobei die Membran eine kritische Oberflächenbenetzungsspannung (CWST) von etwa 30 x 10⁻⁵ N/cm (etwa 30 dyn/cm) bis etwa 40 x 10⁻⁵ N/cm (etwa 40 dyn/cm) aufweist und wobei die poröse Membran Poren mit einem Durchmesser im Bereich von 1 nm bis 100 nm aufweist.

2. Verfahren zum Filtern eines metallhaltigen Fluids, wobei das Verfahren umfasst: Durchleiten eines metallhaltigen Fluids durch eine poröse Membran nach Anspruch 1 und Entfernen von Metall aus dem Fluid.

3. Verfahren nach Anspruch 2, wobei das metallhaltige Fluid ein in der Elektronikindustrie verwendetes Fluid ist.

4. Verfahren nach Anspruch 2 oder 3, umfassend das Entfernen von Metallen der Gruppe 2 und/oder Übergangsmetallen aus dem metallhaltigen Fluid.

5. Verfahren zum Filtern eines Schwefelsäure-Peroxid-Mischungs-(SPM)-Fluids, wobei das Verfahren umfasst: Durchleiten des SPM-Fluids durch eine poröse Membran nach Anspruch 1 und Entfernen von Partikeln aus dem SPM-Fluid.

6. Verfahren nach Anspruch 5, umfassend: Entfernen von Metall aus dem SPM-Fluid.

7. Verfahren nach Anspruch 6, umfassend: Entfernen von Metallen der Gruppe 2 und/oder Übergangsmetallen aus dem metallhaltigen Fluid.

8. Verfahren zur Herstellung einer porösen Membran, das Verfahren umfassend: Kombinieren eines PTFE-Harzes mit einem Perfluorsulfonsäure-(PFSA-)Additiv, um eine Mischung herzustellen, welche auch ein Schmiermittel umfasst; wobei die Mischung das PFSA-Additiv in einer Konzentration von etwa 1 Gew.-% bis etwa 20 Gew.-% umfasst;
Bilden eines Bandes;
Strecken des Bandes, um eine poröse Membran herzustellen; und
Tränken der porösen Membran in Isopropylalkohol (IPA).

9. Verfahren nach Anspruch 8, ferner umfassend ein Trocknen der Membran.

## Revendications

1. Membrane poreuse comprenant PTFE combiné avec un additif d'acide perfluorosulfonique (PFSA), dans laquelle la membrane présente une tension de mouillage de surface critique (CWST) d'environ 30 x 10⁻⁵ N/cm (environ 30 dynes/cm) à environ 40 x 10⁻⁵ N/cm (environ 40 dynes/cm), et dans laquelle la membrane poreuse présente des pores d'un diamètre dans l'intervalle de 1 nm à 100 nm.

2. Procédé de filtration d'un fluide contenant un métal, le procédé comprenant le passage d'un fluide contenant un métal à travers une membrane poreuse selon la revendication 1 et l'élimination de métal du fluide.

3. Procédé selon la revendication 2, dans lequel le fluide contenant un métal est un fluide utilisé dans l'industrie électronique.

4. Procédé selon la revendication 2 ou 3, comprenant l'élimination de métaux du Groupe 2 et/ou métaux de transition du fluide contenant un métal.

5. Procédé de filtration d'un fluide de mélange de peroxyde sulfurique (SPM), le procédé comprenant le passage du fluide SPM à travers une membrane poreuse selon la revendication 1 et l'élimination de particules du fluide SPM.

6. Procédé selon la revendication 5, comprenant l'élimination de métal du fluide SPM.

7. Procédé selon la revendication 6, comprenant l'élimination de métaux du Groupe 2 et/ou métaux de transition du fluide contenant un métal.

8. Procédé de fabrication d'une membrane poreuse, le procédé comprenant la combinaison de résine PTFE avec un additif d'acide perfluorosulfonique (PFSA) pour préparer une combinaison incluant également un lubrifiant ; ladite combinaison comprenant l'additif PFSA dans une concentration d'environ 1 % en masse à environ 20 % en masse ;
la formation d'une bande ;
l'étirage de la bande pour produire une membrane poreuse ; et,
l'immersion de la membrane poreuse dans de l'alcool isopropylique (IPA).

9. Procédé selon la revendication 8, comprenant de plus le séchage de la membrane.
